# EUROPEAN PATENT APPLICATION

(11) **EP 4 746 575 A1**
(43) Date of publication of application: **20.05.2026**
(21) Application number: 24905529.4
(22) Date of filing: 26.07.2024
(51) Int. Cl.: H04W 76/10

(54) **NETWORK CONNECTION METHOD AND APPARATUS, AND ELECTRONIC DEVICE AND READABLE STORAGE MEDIUM**

(30) Priority: 22.12.2023 CN 202311788104; 22.12.2023 CN 202311791581; 22.12.2023 CN 202311788094
(71) Applicant: Midea Group (Shanghai) Co., Ltd., Shanghai 201702 (CN); Midea Group Co., Ltd., Foshan, Guangdong 528311 (CN)
(72) Inventor: XIAN, Zhixiong, Shanghai 201702 (CN)
(74) Representative: Ran, Handong
(86) International application number: PCT/CN2024/107949
(87) International publication number: WO 2025/130033

(57) **Abstract**

Provided in the present application are a network connection method and apparatus, and an electronic device and a readable storage medium. The network connection method comprises: sending a first connection request of a first network to a routing device (S 102); receiving first response information, which is sent by the routing device and corresponds to the first connection request (S 104); determining a connection condition of the first network on the basis of the first response information (S 106); when a device to be connected does not meet the connection condition of the first network, searching for at least one mutual assistance device (S108), wherein the mutual assistance device is connected to the first network by means of the routing device; and connecting to the first network by means of the at least one mutual assistance device (S110). In the network connection method provided in the present application, a continuous and stable connection to a first network is realized by means of a mutual assistance device, thereby improving the networking experience of a device to be connected, and improving the usage experience, for a user, of using the device to be connected.

## Description

This application claims priority to Chinese Patent Application No. 202311788104.9 filed to the China National Intellectual Property Administration (CNIPA) on December 22, 2023, Chinese Patent Application No. 202311791581.0 filed to the CNIPA on December 22, 2023, and Chinese Patent Application No. 202311788094.9 filed to the CNIPA on December 22, 2023, which are herein incorporated by reference in their entireties.

### TECHNICAL FIELD

The present disclosure relates to the field of Internet of Things (IoT) technologies, particularly relates to a network connection method, a network connection apparatus, an electronic device, and a computer-readable storage medium.

### BACKGROUND

In related art, an electronic device may connect to a wireless network via a routing device, thereby enabling the electronic device to access the wireless network. However, in practical use, due to a location of the electronic device or limitations of its own configuration, network signal received from the routing device may be weak. This may result in the electronic device being unable to effectively connect to the wireless network of the routing device or frequently experiencing disconnections, thereby leading to a poor network connectivity experience.

### SUMMARY

The present disclosure may be intended to solve at least one of the technical problems existing in the related art.

To this end, a first aspect of the present disclosure may provide a network connection method.

A second aspect of the present disclosure may provide a network connection method.

A third aspect of the present disclosure may provide a network connection apparatus.

A fourth aspect of the present disclosure may provide a network connection apparatus.

A fifth aspect of the present disclosure may provide an electronic device.

A sixth aspect of the present disclosure may provide a computer-readable storage medium.

A seventh aspect of the present disclosure may provide a computer program product.

The first aspect of the present disclosure may provide a network connection method performed by a to-be-connected device. The connection method may include: sending a first connection request for a first network to a routing device; receiving a first response message matching the first connection request sent by the routing device; determining connection condition for the first network according to the first response message; searching for one or more mutual assistance devices in a case where the to-be-connected device does not meet the connection condition for the first network, wherein the mutual assistance devices may be connected to the first network through the routing device; and, connecting to the first network via the one or more mutual assistance devices.

The network connection method provided by the present disclosure may search for one or more mutual assistance devices connected to the first network when the to-be-connected device does not meet the connection condition for the first network, thereby enabling the to-be-connected device to connect to the mutual assistance device, so as to realize the connection of the to-be-connected device to the first network through the mutual assistance device, and further enabling the to-be-connected device to access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhance the user experience of using the to-be-connected device.

According to the second aspect of the present disclosure, a network connection method performed by a mutual assistance device may be proposed. The mutual assistance device may be connected to the first network through a routing device. The connection method may include: generating and sending a response message according to a connection request in a case where the connection request from the to-be-connected device is received, where the response message may be used for the to-be-connected device to determine the mutual assistance device to be connected; performing key negotiation with the to-be-connected device to generate a key in a case where a key negotiation request from the to-be-connected device is received; and, establishing a network connection with the to-be-connected device according to the key.

The network connection method provided by the present disclosure may connect the to-be-connected device to the mutual assistance device when the to-be-connected device does not meet the connection condition for the first network, so as to realize the connection of the to-be-connected device to the first network through the mutual assistance device, enabling the to-be-connected device to access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhances the user experience of using the to-be-connected device.

According to the third aspect of the present disclosure, a network connection apparatus may be proposed. The network connection apparatus may be applied to a to-be-connected device. The connection apparatus may include a sending unit, a receiving unit, a determining unit, a searching unit, and, a first connection unit. The sending unit may be configured to send the first connection request for the first network to the routing device. The receiving unit may be configured to receive the first response message matching the first connection request sent by the routing device. The determining unit may be configured to determine connection condition for the first network according to the first response message. The searching unit may be configured to search for one or more mutual assistance devices in a case where the to-be-connected device does not meet the connection condition for the first network. The mutual assistance devices may be connected to the first network through the routing device. The first connection unit may be configured to connect to the first network via the one or more mutual assistance devices.

The network connection apparatus provided by the present disclosure may search for one or more mutual assistance devices connected to the first network when the to-be-connected device does not meet the connection condition for the first network, thereby enabling the to-be-connected device to connect to the mutual assistance device, so as to realize the connection of the to-be-connected device to the first network through the mutual assistance device, and further enabling the to-be-connected device to access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhance the user experience of using the to-be-connected device.

According to the fourth aspect of the present disclosure, a network connection apparatus applied to the mutual assistance device may be proposed. The network connection apparatus may be connected to the first network through the routing device. The connection apparatus may include a response unit, a negotiation unit, and a second connection unit. The response unit may be configured to generate and send the response message according to the connection request in a case where the connection request from the to-be-connected device may be received. The response message may be used for the to-be-connected device to determine the mutual assistance device to be connected. The negotiation unit may be configured to perform key negotiation with the to-be-connected device to generate a key in a case where the key negotiation request from the to-be-connected device is received. The second connection unit may be configured to establish the network connection with the to-be-connected device according to the key.

The network connection apparatus provided by the present disclosure may connect the to-be-connected device to the mutual assistance device in a case where the to-be-connected device does not meet the connection condition for the first network, so as to realize the connection of the to-be-connected device to the first network through the mutual assistance device, enabling the to-be-connected device to access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhances the user experience of using the to-be-connected device.

According to the fifth aspect of the present disclosure, an electronic device may be proposed. The electronic device may include a processor and a memory. The memory may store a program or an instruction. The program or the instruction may be executable on the processor. The programs or instructions, when executed by the processor, may implement the operations of the network connection method provided in the first aspect and/or the second aspect.

The electronic device provided by the present disclosure may include a memory and a processor, and further include a program or an instruction stored on the memory. When the program or instruction is executed by the processor, the operations of the network connection method provided in the first aspect and/or the second aspect may be implemented. Therefore, the electronic device may have all the beneficial effects of the above-mentioned network connection method, which are not repeated here.

According to the sixth aspect of the present disclosure, a computer-readable storage medium may be proposed. A program or an instruction may be stored on the computer-readable storage medium. The program or the instruction, when executed by a processor, may implement the operations of the network connection method provided in the first aspect and/or the second aspect.

The computer-readable storage medium provided by the present disclosure may store a program or an instruction thereon. When the program or the instruction is executed by a processor, the operations of the network connection method provided in the first aspect and/or the second aspect may be implemented. Therefore, the computer-readable storage medium may have all the beneficial effects of the above-mentioned network connection method, which are not repeated here.

According to the seventh aspect of the present disclosure, a computer program product may be proposed. The computer program product may include a computer program or an instruction. The computer program or the instruction, when executed by a processor, may implement the operations of the network connection method provided in the first aspect and/or the second aspect.

The computer program product provided by the present disclosure may include a computer program or an instruction. When the computer program or the instruction is executed by a processor, the operations of the network connection method provided in the first aspect and/or the second aspect may be implemented. Therefore, the computer program product has all the beneficial effects of the above-mentioned network connection method, which are not repeated here.

Additional aspects and advantages of the present disclosure would become apparent in the following description, or be understood through the practice of the present disclosure.

### BRIEF DESCRIPTION OF THE DRAWINGS

The above and/or additional aspects and advantages of the present disclosure will become apparent and readily understood from the description of embodiments below in conjunction with the accompanying drawings.
Fig. 1 is a schematic flowchart illustrating a network connection method according to a first embodiment of the present disclosure.
Fig. 2 is a schematic flowchart illustrating a network connection method according to a second embodiment of the present disclosure.
Fig. 3 is a structural block diagram of a network connection apparatus according to a first embodiment of the present disclosure.
Fig. 4 is a structural block diagram of a network connection apparatus according to a second embodiment of the present disclosure.
Fig. 5 is a topology diagram illustrating a network connection according to an embodiment of the present disclosure.
Fig. 6 is a schematic diagram illustrating addressing during data transmission in a network connection method according to an embodiment of the present disclosure.
Fig. 7 is a schematic diagram illustrating an address link in a network connection method according to a first embodiment of the present disclosure.
Fig. 8 is a schematic diagram illustrating an address link in a network connection method according to a second embodiment of the present disclosure.

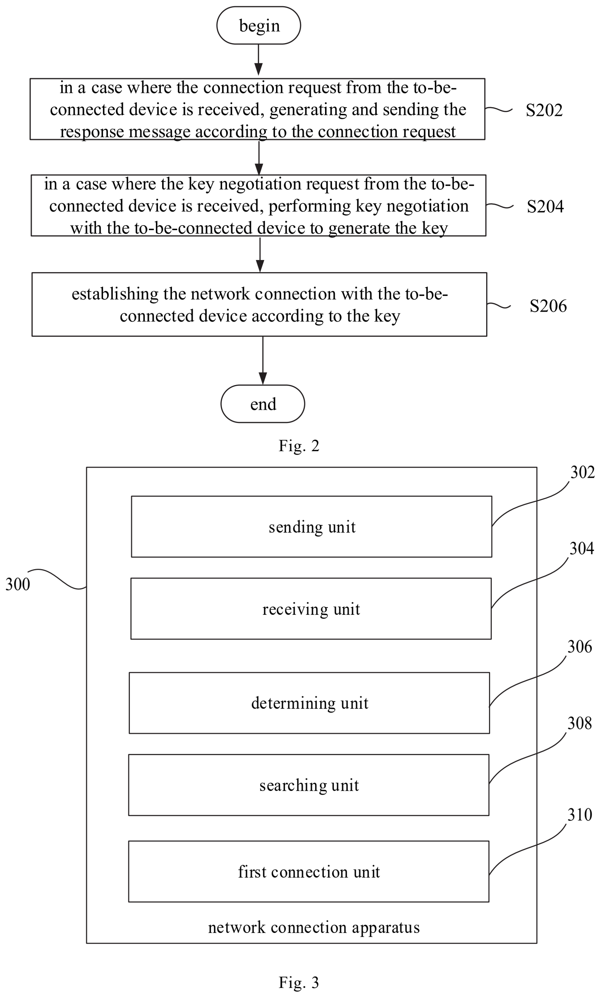

Correspondence between reference numerals in Fig. 3 to Fig. 5 and the components: 300, network connection apparatus; 302, sending unit; 304, receiving unit; 306, determining unit; 308, searching unit; 310, first connection unit; 400, network connection apparatus; 402, response unit; 404, negotiation unit; 406, second connection unit; 502, to-be-connected device; 504, routing device; 506, mutual assistance device; 508, target mutual assistance device.

### DETAILED DESCRIPTION

To facilitate a clearer understanding of the objectives, features, and advantages of the present disclosure, the following provides a detailed description of the present disclosure with reference to the accompanying drawings and specific embodiments. Where there is no conflict, the embodiments of the present disclosure and the features thereof may be combined with each other.

Numerous specific details are set forth in the following description to provide a thorough understanding of the present disclosure. However, the present disclosure may also be implemented in ways different from those described herein. Therefore, the protection scope of the present disclosure may not be limited by the specific embodiments disclosed below.

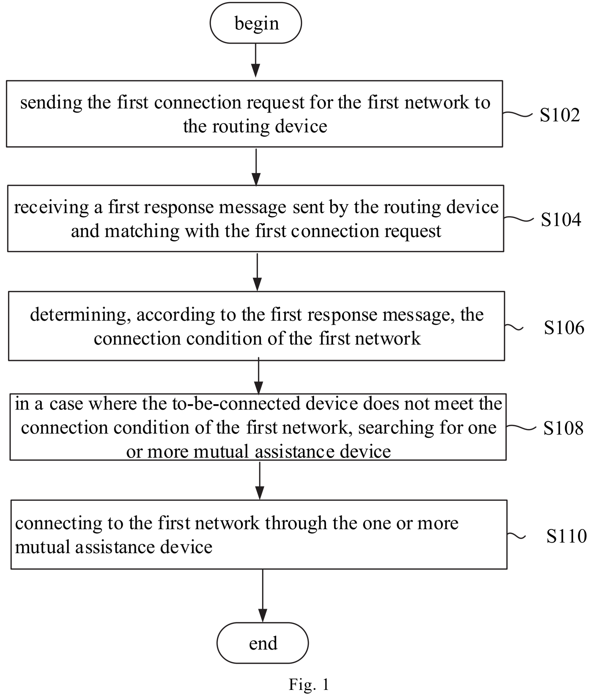

With reference to Figs. 1 to Fig. 8, the following describes a network connection method, a network connection apparatus, an electronic device, and a computer-readable storage medium according to some embodiments of the present disclosure.

As illustrated in Fig. 1, according to an embodiment of the present disclosure, a network connection method may be provided. The network connection method may be performed by a to-be-connected device. The method may include operations at blocks of Fig. 1.

The operation at block S102: sending a first connection request for a first network to a routing device.

The operation at block S104: receiving a first response message sent by the routing device and matching with the first connection request.

The operation at block S106: determining, according to the first response message, a connection condition of the first network.

The operation at block S108: in a case where the to-be-connected device does not meet a connection condition of the first network, searching for one or more mutual assistance device.

The mutual assistance device may be connected to the first network through the routing device.

The operation at block S 110: connecting to the first network through the one or more mutual assistance device.

The network connection method provided in the present disclosure may be configured to connect the to-be-connected device to the first network, thereby enabling the to-be-connected device to access the Internet via the first network.

In some embodiments, the to-be-connected device may be first controlled to send the connection request for the first network to the routing device. The first network may be a network to which the routing device is connected. Sending the connection request for the first network from the to-be-connected device means sending the connection request to the routing device, requesting that the to-be-connected device be connected to the routing device, so as to connect the to-be-connected device to the first network via the routing device.

Further, after receiving the connection request from the to-be-connected device, the routing device may send a feedback message to the to-be-connected device. The to-be-connected device may receive the first response message from the routing device and determine, based on the first response message sent from the routing device, whether the to-be-connected device meets the connection condition for the first network. In some embodiments, the connection condition for the first network may include whether a signal strength of the network signal received by the to-be-connected device from the routing device is greater than a preset threshold. In a case where the signal strength of the network signal that can be received by the to-be-connected device from the routing device is relatively high, it may be indicated that, the to-be-connected device may be able to maintain a stable connection with the routing device and thus reliably and persistently access the first network. Conversely, in a case where the signal strength of the network signal that can be received by the to-be-connected device from the routing device is relatively low, the to-be-connected device may be unable to connect to the routing device or experience frequent disconnections. The preset strength of the network signal may be set to -55 dBm.

Further, in a case where the to-be-connected device does not meet the connection condition for the first network, the to-be-connected device may search for one or more mutual assistance device. The mutual assistance device is connected to the first network. That is, the mutual assistance device is connected to the routing device of the first network, thereby accessing the first network via the routing device. Specifically, the mutual assistance device may be a household appliance capable of Internet access, such as a television, an air conditioner, a refrigerator, or the like.

Further, after detecting one or more mutual assistance devices, the to-be-connected device may connect to the mutual assistance device, thereby connecting to the first network through the mutual assistance device and enabling Internet access via the first network.

In the network connection method provided by the present disclosure, in a case where the to-be-connected device does not meet the connection condition of the first network, the to-be-connected device may search for one or more mutual assistance device connected to the first network. Thus, the to-be-connected device may be connected to the mutual assistance device, so as to connect the to-be-connected device to the first network through the mutual assistance device. In this way, the to-be-connected device may realize the Internet access function through the first network. Therefore, in a case where the strength of the network signal of the routing device received by the to-be-connected device is low and continuous and stable connection to the first network through the routing device cannot be guaranteed, the present disclosure may realize continuous and stable connection to the first network through the mutual assistance device. The network access experience of the to-be-connected device may be increased, and the user experience of using the to-be-connected device may be enhanced.

In some embodiments, for example,, connecting to the first network through one or more mutual assistance devices may include: sending a second connection request of the first network to the one or more mutual assistance devices; receiving a second response message sent by one or more mutual assistance devices and matching with the second connection request; determining a target mutual assistance device from one or more mutual assistance devices according to one or more second response messages; and establishing a network connection with the target mutual assistance device.

In the present embodiment, in a case where the to-be-connected device cannot connect to the first network through the routing device, the to-be-connected device may send a second connection request to one or more mutual assistance devices, and wait for the second response message sent by the mutual assistance device.

Further, after receiving the second response messages sent by one or more mutual assistance devices, the target mutual assistance device to be connected may be determined from the one or more mutual assistance devices according to the second response message of each mutual assistance device.

In a case where there is only one mutual assistance device, after receiving the second response message sent by the mutual assistance device, the device may be directly determined as the target mutual assistance device to be connected. At this time, the to-be-connected device may be controlled to connect to the mutual assistance device, so as to realize connection to the first network through the mutual assistance device.

In a case where there are two or more mutual assistance devices, the to-be-connected device may receive a plurality of second response messages. At this time, the target mutual assistance device to be connected may be determined from the plurality of mutual assistance devices according to the plurality of second response messages. That is to say, the target mutual assistance device most suitable for the current to-be-connected device to connect to may be determined from the plurality of mutual assistance devices according to the second response messages of the plurality of mutual assistance devices, and the to-be-connected device may be further controlled to connect to the target mutual assistance device, so as to ensure the stability of the to-be-connected device after connecting to the first network.

In some embodiments, for example, establishing a network connection with the target mutual assistance device may include: performing key negotiation with the target mutual assistance device; and establishing the network connection with the target mutual assistance device according to the key generated by the mutual assistance device.

In the present embodiment, during a process of connecting the to-be-connected device to the target mutual assistance device, the to-be-connected device may first be controlled to perform key negotiation with the mutual assistance device, so that the mutual assistance device may be enabled to generate a key, and further the to-be-connected device and the mutual assistance device may establish a connection based on the generated key.

A key between the to-be-connected device and the mutual assistance device may be generated through key negotiation between them. In a case where data is transmitted between the to-be-connected device and the mutual assistance device, the data may be encrypted using the key generated through the key negotiation, so as to ensure the security of data transmission between the to-be-connected device and the mutual assistance device.

In some embodiments, for example, the first connection request may include a first ciphertext. The first ciphertext may be obtained by encrypting a first text based on the public key of the mutual assistance device. Performing key negotiation with the target mutual assistance device may include: receiving a second ciphertext sent by the mutual assistance device, wherein the second ciphertext may be obtained by the mutual assistance device encrypting the first text and a second text, the first text may be obtained by the mutual assistance device decrypting the first ciphertext, and the second text may be a text for key negotiation between the mutual assistance device and the to-be-connected device; decrypting the second ciphertext to generate a third text; determining a negotiation result of the key negotiation according to the third text; and sending the negotiation result to the mutual assistance device. The negotiation result may be configured to be received by the mutual assistance device and instruct the mutual assistance device to generate the key.

In the present embodiment, the to-be-connected device may first send a first ciphertext to the target mutual assistance device. The first ciphertext may be obtained by encrypting a first text according to the public key of the target mutual assistance device. Further, the mutual assistance device may receive the first ciphertext from the to-be-connected device, and then decrypt the first ciphertext to generate the first text.

Further, after decrypting the first text, the mutual assistance device may encrypt the first text and the second text based on its own public key to generate a second ciphertext. The second text may be a preset text for key negotiation between the mutual assistance device and the to-be-connected device. Then the mutual assistance device may send the second ciphertext to the to-be-connected device.

Further, after receiving the second ciphertext, the to-be-connected device may decrypt the second ciphertext to generate a third text. Then the to-be-connected device may determine the negotiation result of the key negotiation with the mutual assistance device.

Further, in a case where the negotiation result of the key negotiation is determined to be successful, the mutual assistance device may generate a key according to the first text and the second text.

In the process of key negotiation, the to-be-connected device may generate the first ciphertext according to the public key of the mutual assistance device, and the mutual assistance device may generate the second ciphertext according to the public key of the to-be-connected device. Thus, after decrypting the first ciphertext and the second ciphertext, the negotiation result of the key negotiation may be determined according to the generated third text, thereby realizing the key negotiation between the to-be-connected device and the mutual assistance device, and ensuring the accuracy of the negotiation result.

In some embodiments, for example, determining the negotiation result of the key negotiation according to the third text may include: obtaining text content of the third text; and determining the negotiation result as successful in a case where the text content of the third text includes the first text.

In the present embodiment, after receiving the second ciphertext, the to-be-connected device may decrypt the second ciphertext to generate the third text. Then the to-be-connected device may determine the negotiation result of the key negotiation with the mutual assistance device according to the third text.

Specifically, the text content of the third text may first be obtained to determine whether the first text sent by the to-be-connected device exists in the third text. In a case where the first text exists in the third text, it may indicate that the mutual assistance device generates the third text based on the first text sent by the to-be-connected device, and further the negotiation result of the key negotiation between the mutual assistance device and the to-be-connected device may be determined as successful, and then the mutual assistance device may generate a key according to the first text and the second text.

In some embodiments, for example, sending the negotiation result to the mutual assistance device may include: encrypting the negotiation result based on the public key of the to-be-connected device to generate a third ciphertext; and sending the third ciphertext to the mutual assistance device.

In the present embodiment, after receiving the second ciphertext, the to-be-connected device may decrypt the second ciphertext to generate the third text. Then the to-be-connected device may determine the negotiation result of the key negotiation with the mutual assistance device according to the third text.

Further, after determining the negotiation result of the key negotiation as successful according to the third text, the to-be-connected device may encrypt the negotiation result based on the public key of the to-be-connected device to generate a third ciphertext, and then send the third ciphertext to the mutual assistance device, so as to notify the mutual assistance device of the negotiation result.

Further, after receiving the third ciphertext, the mutual assistance device may decrypt the third ciphertext to determine whether the negotiation result is successful. After receiving the negotiation result, the mutual assistance device may generate a target key according to the first text and the second text.

Specifically, the negotiation result may be the text "ok".

In some embodiments, for example, determining a target mutual assistance device from one or more mutual assistance devices according to one or more second response messages may include: determining network parameters of the plurality of mutual assistance devices according to the plurality of second response messages; and determining the target mutual assistance device from the plurality of mutual assistance devices according to the network parameters.

In the present embodiment, in a case where the first response messages sent by the plurality of mutual assistance devices are received, the network parameters of the plurality of mutual assistance devices may be determined according to the plurality of first response messages. Further, the target mutual assistance device may be determined from the plurality of mutual assistance devices according to the network parameters of the plurality of mutual assistance devices, and then the to-be-connected device may be controlled to connect to the target mutual assistance device, so as to realize the connection of the to-be-connected device to the first network through the target mutual assistance device.

The network parameters of the mutual assistance device may indicate connection stability between the mutual assistance device and the to-be-connected device, and thus the target mutual assistance device with the most stable connection to the to-be-connected device may be determined from the plurality of mutual assistance devices according to the network parameters of the plurality of mutual assistance devices, thereby increasing the stability of the to-be-connected device after connecting to the first network.

By screening the target mutual assistance device according to the network parameters of the mutual assistance device, the stability of the network connection between the to-be-connected device and the target mutual assistance device may be further increased, thereby enhancing the network access experience of the to-be-connected device and further enhancing the user experience of using the to-be-connected device.

In some embodiments, for example, the network parameters may include signal strength, network hierarchy level of the mutual assistance device in the first network, and number of access points of the mutual assistance device. Determining the target mutual assistance device from the plurality of mutual assistance devices according to the network parameters may include: determining a connection index of the mutual assistance device according to at least any one of the signal strength, the network hierarchy level and the number of access points; and, determining the target mutual assistance device from the plurality of mutual assistance devices according to the connection index.

In the present embodiment, the target mutual assistance device may be determined from the plurality of mutual assistance devices according to the response messages sent by the plurality of mutual assistance devices. First, a primary selection may be performed according to the signal strength of the mutual assistance device, the layer number of the mutual assistance device in the first network and the number of connected devices of the mutual assistance device. Specifically, mutual assistance devices with signal strength greater than -55dBm, the layer number less than or equal to 4 and the number of connected devices less than 6 may be screened out.

Further, among the screened mutual assistance devices, the connection index of the mutual assistance device may be determined according to the signal strength of the mutual assistance device, the layer number of the mutual assistance device in the first network and the number of connected devices of the mutual assistance device. The mutual assistance device with the greatest connection index may be determined as the target mutual assistance device.

The connection index of the mutual assistance device may be configured to indicate the network connection stability information after the connection between the mutual assistance device and the to-be-connected device. The connection index of the mutual assistance device may be determined according to the signal strength of the device, the layer number of the mutual assistance device in the first network and the number of connected devices of the mutual assistance device, so as to realize the determination of the connection index and further determine the target mutual assistance device, thereby ensuring that, after the to-be-connected device is connected to the target mutual assistance device, a stable connection may be maintained, and further the network access experience of the to-be-connected device may be guaranteed.

Further, determining the connection index of the mutual assistance device according to at least any one of the signal strength, the network hierarchy level and the number of access points may include: obtaining strength weight for the signal strength and strength scores for different signal strengths; obtaining the point weight for the number of access points and the point score for different numbers of access points; obtaining the hierarchy level weight for the network hierarchy level and the hierarchy level scores for different network hierarchy levels; determining the connection index according to the preset formula *P = A* × *a + B* × *b* + *C* × *c*. P is the connection index. A is the strength score. *a* is the strength weight. B is the point score. *b* is the point weight. C is the hierarchy level score. *c* is the hierarchy level weight.

Specifically, the signal strength of the mutual assistance device, the strength weight and strength score for the signal strength, the layer number weight and layer number score for the layer numbers, as well as the point weight and point score for the number of connected devices may first be determined, and then the connection index of each mutual assistance device may be further calculated.

Specifically, the connection index may be calculated according to a preset formula *P* = *A × a + B × b* + *C* × *c*. P is the connection index. A is the strength score. *a* is the strength weight. B is the point score. *b* is the point weight. C is the hierarchy layer score. *c* is the hierarchy layer weight.

In some embodiments, for example, determining the connection condition of the first network according to the first response message may include: determining the signal strength of the routing device according to the first response message; and, determining the connection condition according to the signal strength.

In the present embodiment, to determine whether the to-be-connected device meets the connection condition for the routing device, the signal strength of the routing device may first be determined according to the first response message of the routing device. In a case where the strength of the network signal of the routing device receivable by the to-be-connected device is relatively high, it may indicate that the to-be-connected device is able to stably connect to the routing device, so that the to-be-connected device is able to access the first network stably and continuously. In a case where the strength of the network signal of the routing device receivable by the to-be-connected device is relatively low, it may cause the to-be-connected device to be unable to connect to the routing device or have frequent disconnection. In this case, the first response messages from one or more mutual assistance devices may be received, and then the target mutual assistance device may be determined according to the first response messages from the one or more mutual assistance devices, so as to realize the connection to the first network through the target mutual assistance device.

The preset strength of the network signal may be set to -55dBm.

In some embodiments, for example, determining the connection condition of the first network according to the first response message may include: determining that the to-be-connected device does not meet the connection condition in a case where the first response message includes a preset data packet.

In the present embodiment, to determine whether the to-be-connected device meets the connection condition for the routing device, the determination may also be made according to whether the received first response message includes the preset data packet. Specifically, in a case where the received first response message does not include the preset data packet, it may indicate that the to-be-connected device is able to stably connect to the routing device, so that it may access the first network stably and continuously.

In a case where the first response message includes the preset data packet, it may indicate that the to-be-connected device does not meet the connection condition for connecting to the routing device. In this case, the first response messages from one or more mutual assistance devices may be received, and then the target mutual assistance device may be determined according to the first response messages from the one or more mutual assistance devices, so as to realize the connection to the first network through the target mutual assistance device.

In some embodiments, for example, after connecting to the first network through one or more mutual assistance devices, the connection method may further include: sending a detection signal to the target mutual assistance device according to a preset time interval; receiving a reply signal sent by the target mutual assistance device; and, detecting a connection state between the to-be-connected device and the target mutual assistance device according to the detection signal and the reply signal.

In the present embodiment, after the to-be-connected device connects to the first network through the target mutual assistance device, the to-be-connected device may send the detection signal to the target mutual assistance device according to the pre-set time interval. Specifically, the preset time interval may be 1 minute. That is, sending the detection signal every 1 minute. Further, in a case where the target mutual assistance device does not receive the detection signal from the to-be-connected device for 2 minutes, it may determine that the to-be-connected device is lost, and relevant information of the to-be-connected device may be cleared. In addition, when the to-be-connected device does not receive the reply from the target mutual assistance device to the detection signal, it may indicate that the connection is invalid. All devices under this node shall be notified to clear the connection relationship and search for the network again.

By sending the detection signal from the to-be-connected device, the connection state between the to-be-connected device and the target mutual assistance device may be detected in real time, so as to timely determine whether the to-be-connected device keeps the connection with the target mutual assistance device. In a case where the to-be-connected device is disconnected from the target mutual assistance device, the connection process may be initiated again to ensure connection effect of the to-be-connected device.

As illustrated in Fig. 2, according to an embodiment of the present disclosure, a network connection method performed by a mutual assistance device is proposed. The mutual assistance device may be connected to the first network through the routing device. The connection method includes the operations illustrated at blocks of Fig. 2.

The operation at block S202: in a case where a connection request from the to-be-connected device is received, generating and sending the response message according to the connection request.

The response message may be configured for the to-be-connected device to determine the mutual assistance device to be connected.

The operation at block S204: in a case where the key negotiation request from the to-be-connected device is received, performing key negotiation with the to-be-connected device to generate a key.

The operation at block S206: establishing the network connection with the to-be-connected device according to the key.

For the network connection method provided by the present disclosure, in a case where the mutual assistance device receives the connection request from the to-be-connected device, the mutual assistance device may generate and send the response message according to the connection request. The response message is sent to the to-be-connected device, for the to-be-connected device to determine the mutual assistance device to be connected according to the response message.

The connection request sent by the to-be-connected device may be sent to a plurality of mutual assistance devices at the same time. Each mutual assistance device would send a response message in response to the connection request from the to-be-connected device. The to-be-connected device may determine the mutual assistance device to be connected according to the received response messages from the plurality of mutual assistance devices.

Further, after the to-be-connected device determines the mutual assistance device to be connected, it would send the key negotiation request to the mutual assistance device. After the mutual assistance device performs key negotiation with the to-be-connected device, a key may be generated. Finally, the mutual assistance device may establish a network connection with the to-be-connected device according to the generated key.

The network connection method provided by the present disclosure may connect the to-be-connected device to the mutual assistance device when the to-be-connected device does not meet the connection condition of the first network, so as to realize the connection of the to-be-connected device to the first network through the mutual assistance device, enabling the to-be-connected device to access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhances the user experience of using the to-be-connected device.

In some embodiments, for example, performing the key negotiation with the to-be-connected device to generate the key in a case where the key negotiation request from the to-be-connected device is received may include:

decrypting the first ciphertext to generate the first text in a case where the first ciphertext sent by the to-be-connected device is received; encrypting the first text and the second text to generate and send the second ciphertext, where the second text is a preset text for key negotiation between the mutual assistance device and the to-be-connected device; receiving the key negotiation result sent by the to-be-connected device, and generating a key according to the first text and the second text in a case where the key negotiation result is successful. The key negotiation result may be determined by the to-be-connected device according to the third text obtained by decrypting the second ciphertext.

In the present embodiment, the to-be-connected device may first send the first ciphertext to the target mutual assistance device. The first ciphertext may be obtained by encrypting the first text according to the public key of the target mutual assistance device. Further, the mutual assistance device may receive the first ciphertext from the to-be-connected device and then decrypt the first ciphertext to generate the first text.

Further, after decrypting the first text, the mutual assistance device may encrypt the first text and the second text based on the public key of the mutual assistance device to generate the second ciphertext. The second text may be a preset text for key negotiation between the mutual assistance device and the to-be-connected device. Then the mutual assistance device may send the second ciphertext to the to-be-connected device.

Further, after receiving the second ciphertext, the to-be-connected device may decrypt the second ciphertext to generate the third text. Then the to-be-connected device may determine the negotiation result of the key negotiation with the mutual assistance device according to the third text.

Further, in a case where the negotiation result of the key negotiation is determined to be successful, the mutual assistance device may generate a key according to the first text and the second text.

In the process of key negotiation, the to-be-connected device generates the first ciphertext according to the public key of the mutual assistance device, and the mutual assistance device generates the second ciphertext according to the public key of the to-be-connected device. Thus, after decrypting the first ciphertext and the second ciphertext, the negotiation result of the key negotiation may be determined according to the generated third text, thereby realizing the key negotiation between the to-be-connected device and the mutual assistance device and ensuring the accuracy of the negotiation result.

In some embodiments, for example, after establishing the network connection with the to-be-connected device according to the key, the network connection method may further include: updating the node links of the devices connected to the first network.

In the present embodiment, after the to-be-connected device is connected to the target mutual assistance device, it is necessary to update the device node link of the first network. In this way, the accuracy of the device node links of the devices connected to the first network may be ensured, thereby ensuring that data transmission in the first network may be performed according to the correct device node links and guaranteeing the accuracy of the data transmission process.

Further, updating the device node links of the devices connected to the first network may include: obtaining an original link of the first network, where the original link may be the device node link of the first network before the to-be-connected device is connected to the target mutual assistance device; in a case where there is no device node downstream of the device node of the mutual assistance device in the original link, adding the device node of the to-be-connected device to the downstream of the device node of the mutual assistance device; in a case where there is a device node downstream of the device node of the mutual assistance device in the original link, copying the original link to generate a copied link; replacing the downstream device node of the mutual assistance device in the copied link with the device node of the to-be-connected device.

Specifically, after the to-be-connected device is connected to the mutual assistance device, the to-be-connected device may first obtain the original link of the first network, i.e., the device node link of the first network before the to-be-connected device is connected to the mutual assistance device. Then the to-be-connected device may determine whether there is any device node connected to the downstream of the mutual assistance device in the original link of the first network.

In the original link of the first network, if there is no device node downstream of the mutual assistance device, the device node of the to-be-connected device may be directly added to the downstream of the mutual assistance device in the original link, so as to realize update of the device node link of the first network.

If the downstream node of the mutual assistance device is occupied, i.e., there is a device node downstream of the mutual assistance device, the original link of the first network may be copied to generate a copied link. The copied link is identical to the original link of the first network at this time. Then the downstream device node of the mutual assistance device in the copied link may be replaced with the device node of the to-be-connected device, thereby generating a new device node link and completing the update of the device node link of the first network.

Further, after updating the device node link of the first network, a device routing table of the first network may be established. The new routing table may be sent to each device in the first network, so that each device has a complete routing table of the first network, facilitating each device to locate the next device node for data transmission according to the routing table during the data transmission process.

In some embodiments, for example, the connection method may further include: sending the key to all devices connected to the mutual assistance device.

In the present embodiment, after generating the target key, the mutual assistance device may send the target key to the to-be-connected device, so that the to-be-connected device may perform data transmission with the mutual assistance device based on the target key.

In addition, the mutual assistance device may also send the target key to another device connected to it, so that when the another device perform data transmission with the to-be-connected device through the mutual assistance device, data may be encrypted and decrypt based on the target key, ensuring the security of data transmission between the another device and the to-be-connected device through the mutual assistance device.

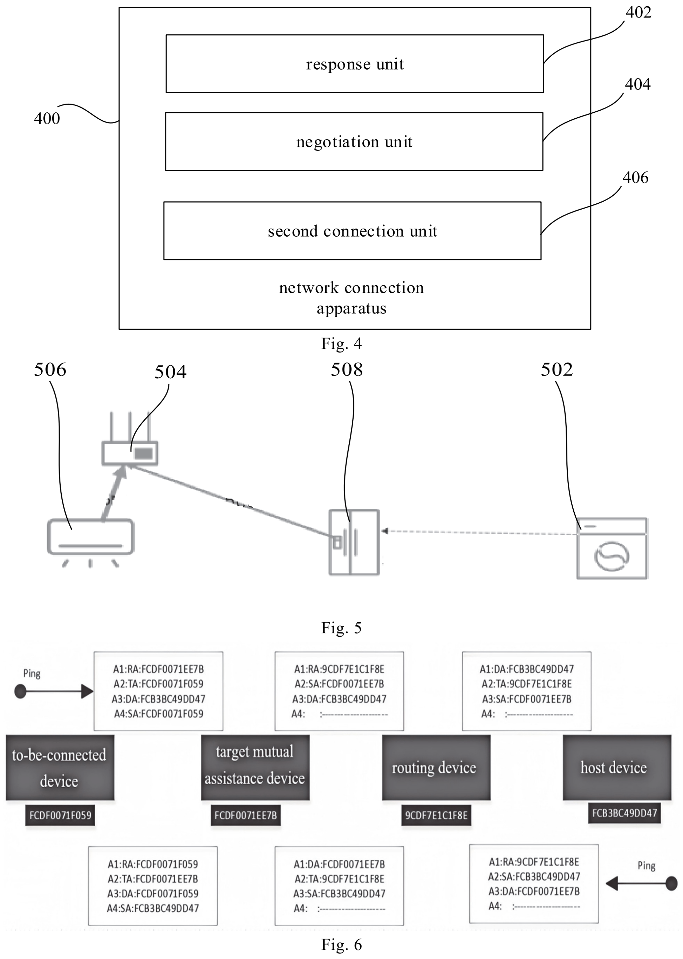

In a specific embodiment, as illustrated in Fig. 5, when the to-be-connected device 502 needs to connect to the first network, the to-be-connected device may first be controlled to send a connection request for the first network. The connection request may be configured to discover connectable internet access devices. Specifically, the to-be-connected device 502 may send a connection request every 0.5s. If no response from another device is received for a long time, the to-be-connected device 502 may send requests at random intervals in 0.1-second increments within 5s. Meanwhile, the to-be-connected device 502 may also monitor beacons sent by the routing device 504, and make a comprehensive judgment according to the scanned wireless access points and the device information of the mutual assistance device 506, so as to determine whether to connect to the routing device 504 or the mutual assistance device 506.

Specifically, during information interaction of the to-be-connected device 502 with the routing device 504 and/or the mutual assistance device 506, the sent information may include a plurality of fields. Among the plurality of fields, the key fields may include capability display, frame type, message identifier (ID), command (CMD), and hierarchy layer level. In one embodiment, the description of the key fields may be as follows: Capability display: 8 bits, where b0:1 indicates mutual assistance is supported; b0:0 indicates mutual assistance is not supported; other bits are reserved. Frame type: 01 for probe request; 02 for probe response; 03 for action. Message ID: a global ID, which is set by the initiator and returned unchanged by the responder. CMD: 01 for key negotiation; 02 for password update; 03 for routing table update. Hierarchy layer level: the network hierarchy layer level where the mutual assistance device 506 is located; a mutual assistance device 506 directly connected to the routing device 504 is at hierarchy layer 0, a mutual assistance device 506 connected to a mutual assistance device 506 directly linked to the routing device 504 is at hierarchy layer 1, a leaf node connected to hierarchy layer 1 is at hierarchy layer 2, and so on; the layer hierarchy level range may be less than or equal to 4.

Specifically, the connection request sent by the to-be-connected device 502 may include the following fields: protocol version, capability display, frame type, message ID, CMD, negotiation step, Pubkey, Sha, and R1. In one embodiment, the protocol version may be configured to indicate the version of the communication protocol for the sent connection request. The capability display may be configured to show whether the to-be-connected device 502 supports connection with the mutual assistance device 506. The frame type may be configured to indicate the message type of the sent connection request. The message ID may be configured to display the sent ID information, which may be set by the initiator and returned unchanged by the responder. The CMD: 01 may represent key negotiation, 02 may represent password update, and 03 may represent routing table update. The negotiation step may be configured to represent the current process in the connection procedure. The Pub key may be the public key generated by the to-be-connected device 502. The Sha may be the ciphertext encryption method. The R1 may be the ciphertext encrypted based on the public key.

Further, after receiving the response message from the routing device 504, the to-be-connected device 502 may determine the strength of the network signal of the routing device 504 receivable by the to-be-connected device according to the response message from the routing device 504. In a case where the strength of the network signal of the routing device 504 receivable by the to-be-connected device 502 is lower than -55dBm, it may cause the to-be-connected device 502 to fail to connect to the routing device 504 or suffer frequent disconnections. In this case, it may determine whether the response message from the mutual assistance device 506 is received.

When the mutual assistance device 506 receives the connection request, the mutual assistance device 506 may send a response message after making a judgment according to rules. The judgment rules may be as follows: 1. The mutual assistance device may itself allow access of the to-be-connected device; 2. The device requested for access by the to-be-connected device 502 is the mutual assistance device 506; 3. The name of the routing device 504 requested for access is the same as that of the network the mutual assistance device itself is connected to. The response message may include vendor-specific private information, the number of connected terminals, the located hierarchy layer level, and other information.

Specifically, in addition to the fields included in the connection request sent by the to-be-connected device 502, the response message sent by the mutual assistance device 506 may further include the following fields: hierarchy layer level, configured to indicate the hierarchy layer level of the mutual assistance device 506 in the first network; number of access points, configured to indicate the number of devices accessed by the mutual assistance device 506; strength of the network signal; R2, the ciphertext encrypted based on the public key of the mutual assistance device 506; and R1.

Further, the target mutual assistance device 508 may be determined from the plurality of mutual assistance devices 506 according to the response messages sent by the plurality of mutual assistance devices 506. First, a primary selection may be performed according to the signal strength of the mutual assistance device 506, the hierarchy layer level of the mutual assistance device 506 in the first network, and the number of connected devices of the mutual assistance device 506. Specifically, the mutual assistance devices 506 with a signal strength greater than -55dBm, hierarchy layer level less than or equal to 4, and the number of connected devices less than 6 may be screened out.

Further, among the screened mutual assistance devices 506, the connection index of each mutual assistance device 506 may be determined according to the signal strength of the mutual assistance device 506, the hierarchy layer level of the mutual assistance device 506 in the first network, and the number of connected devices of the mutual assistance device 506, and the mutual assistance device 506 with the greatest connection index may be determined as the target mutual assistance device 508. Specifically, the signal strength of the mutual assistance device 506, the strength weight and strength score for the signal strength, the hierarchy layer weight and hierarchy layer score for the hierarchy layer level, as well as the point weight and point score for the number of connected devices may first be determined, and then the connection index of each mutual assistance device 506 may be further calculated.

Specifically, the connection index may be calculated according to the formula *P = A* × *a + B* × *b + C* × *c*. P is the connection index, A is the strength score, *a* is the strength weight, B is the point score, *b* is the point weight, C is the hierarchy layer score, and *c* is the hierarchy layer weight. For example, the strength weight for the signal strength may be 0.5. The strength score matching with a signal strength of -50dBm may be 4. The point weight for the number of connected devices is 0.5, and the point score matching with 5 connected devices may be 4. The hierarchy layer weight for hierarchy layer level is 0.3, and the hierarchy layer score matching with hierarchy layer number 3 may be 4. If a mutual assistance device 506 has a signal strength of -50dBm, 5 connected devices, and a hierarchy layer level of 3, the connection index of this mutual assistance device 506 may be calculated as: *P* = 4 × 0.5 + 4 × 0.3 + 4 × 0.2 = 4.

Further, after the target mutual assistance device 508 is determined, the to-be-connected device 502 may be controlled to perform key negotiation with the target mutual assistance device 508 to generate a key for data transmission between the to-be-connected device 502 and the target mutual assistance device 508. The connection request sent by the to-be-connected device 502 may include the text R1 encrypted with the public key of the to-be-connected device 502. Correspondingly, the response message sent by the target mutual assistance device 508 to the to-be-connected device 502 may include R1, and the text R1 and R2 both encrypted with the public key of the to-be-connected device 502.

In the process of key negotiation, the encryption key may be obtained by using the ECC encryption algorithm. The to-be-connected device may initiate a scan and initiate key negotiation at the same time, and the target mutual assistance device 508 may response to implement the second operation of the key negotiation. The third and fourth steps may use ACTION frames to implement key confirmation.

First, after the to-be-connected device 502 receives the response message from the target mutual assistance device 508, the to-be-connected device 502 may decrypt the encrypted text. If the decrypted text includes R1, it indicates that the key negotiation between the to-be-connected device 502 and the mutual assistance device 506 is successful. Then the to-be-connected device 502 may encrypt the negotiation result "OK" based on the public key of the mutual assistance device 506 and send the encrypt result to the mutual assistance device 506. After receiving the negotiation result, the mutual assistance device 506 may generate a key according to R1 and R2. The mutual assistance device 506 may encrypt the text "OK" based on the generated key, and send the encrypt result to the to-be-connected device 502, thereby completing the key negotiation. Then, data transmission between the to-be-connected device 502 and the mutual assistance device 506 may be performed based on the generated key. Specifically, during the key negotiation process, the to-be-connected device 502 may use a 4-address mode action frame to send key negotiation information. The information sent by the to-be-connected device 502 and the information sent by the mutual assistance device 506 may include the following fields: protocol version, capability display, frame type, message ID, CMD, negotiation step, and ciphertext.

Further, after the key negotiation is completed, the device node link of the first network may be updated. Specifically, in the original link of the first network, if there is no device node downstream of the target mutual assistance device 508, the device node of the to-be-connected device 502 may be directly added to the downstream of the target mutual assistance device 508 in the original link to realize the update of the device node link of the first network.

If the downstream node of the target mutual assistance device 508 is occupied, i.e., there is a device node downstream of the target mutual assistance device 508, the original link of the first network may be copied to generate a copied link. The copied link is identical to the original link of the first network at this time. Then the downstream device node of the target mutual assistance device 508 in the copied link may be replaced with the device node of the to-be-connected device 502, thereby generating a new device node link and completing the update of the device node link of the first network.

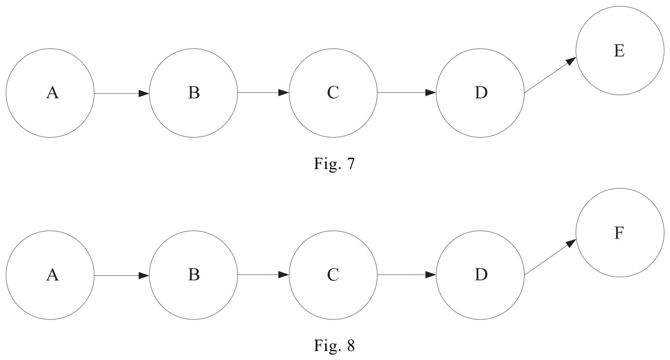

For example, as illustrated in Fig. 7 and Fig. 8, the original link may be A-B-C-D. When E accesses the network, D may add E to the end to obtain A-B-C-D-E. Meanwhile, D may report to the upstream device nodes that E has been added to the end of the A-B-C-D routing table. After receiving this information, each node may add E after D to complete node synchronization. In a case where another device F is added to the end of D on the A-B-C-D link at the same time, D detects that its downstream end has been occupied, D may then copy the link and adds F to the downstream end of D. Meanwhile, the node D may synchronize the information about the end addition to the root node. If the downstream end of another node is also occupied, the same copy-and-add operation may be performed. Then each node may obtain two complete link lists: A-B-C-D-F and A-B-C-D-E. Specifically, the data sent to upstream device nodes for all node to update may include the following fields: protocol version; capability display; frame type; message ID; CMD; Sub, configured for updating the link list for the associated network link; Len, configured for indicating the length of the character string, which is usually a multiple of 6; Macdata, mac data with a length of 6(N+2) bytes. N may represent the current hierarchy layer level of the device. The MAC addresses are aligned in little-endian order and arranged sequentially starting from the mutual assistance device connected to the routing device. Example of MACdata arrangement may be: MAC root, MAC1, MAC2...... MACend.

Further, after the to-be-connected device 502 connects to the first network through the target mutual assistance device 508, the data forwarding rules may be described as follows.

As illustrated in Fig. 6, the data transmission between the to-be-connected device 502 and the target mutual assistance device 508 may adopt a 4-address mode, while the data transmission between the target mutual assistance device 508 and another mutual assistance devices 506 as well as the data transmission between the target mutual assistance device 508 and the routing device 504 may adopt a 3-address mode. The to-be-connected device 502 may be connected to the target mutual assistance device 508. The target mutual assistance device 508 may be connected to the routing device 504. The routing device 504 may be connected to a host device. The process for the to-be-connected device 502 to send data to the host device: the to-be-connected device 502 sends 4 addresses to the target mutual assistance device 508, wherein the 4 addresses may include: Receiver Address (RA) - physical address of the target mutual assistance device 508, Transmitter Address (TA) - physical address of the to-be-connected device 502, Destination Address (DA) - physical address of the host device, and, Source Address (SA) - physical address of the to-be-connected device 502; the target mutual assistance device 508 sends 3 addresses to the routing device 504, wherein the 3 addresses may include: Receiver Address (RA) - physical address of the routing device 504, Source Address (SA) - physical address of the target mutual assistance device 508, Destination Address (DA) - physical address of the host device; the routing device 504 sends 3 addresses to the host device, wherein the 3 addresses may include: Destination Address (DA) - physical address of the host device, Transmitter Address (TA) - physical address of the routing device 504, and, Source Address (SA) - physical address of the target mutual assistance device 508.

The process for the host device to send data to the to-be-connected device 502: the host device sends 3 addresses to the routing device 504, wherein the 3 addresses may include: Receiver Address (RA) - physical address of the routing device 504, Source Address (SA) - physical address of the host device, and, Destination Address (DA) - physical address of the target mutual assistance device 508; the routing device 504 sends 3 addresses to the target mutual assistance device 508, wherein the 3 addresses may include: Destination Address (DA) - physical address of the target mutual assistance device 508, Transmitter Address (TA) - physical address of the routing device 504, and, Source Address (SA) - physical address of the host device; the target mutual assistance device 508 sends 4 addresses to the to-be-connected device 502, wherein the 4 addresses may include: Receiver Address (RA) - physical address of the to-be-connected device 502, Transmitter Address (TA) - physical address of the target mutual assistance device 508, and, Destination Address (DA) - physical address of the to-be-connected device 502, and, Source Address (SA) - physical address of the host device.

Specifically, when the to-be-connected device 502 actively sends data, it may detect whether its own address resolution protocol (ARP) table contains the physical address of the target mutual assistance device 508. If yes, the to-be-connected device 502 may directly convert the data into the 4-address mode and send it to the target mutual assistance device 508. If not, the to-be-connected device 502 may transmit the data level by level to the mutual assistance device 506 connected to the routing device 504 via the target mutual assistance device 508 in the 4-address mode.

When the mutual assistance device 506 connected to the routing device 504 receives the data sent by the routing device 504, the mutual assistance device 506 may first determine whether the received data contains the logical address of the mutual assistance device 506 itself. If yes, the data may be transmitted to an application layer of the mutual assistance device 506 itself. If not, the mutual assistance device 506 may determine the physical address of the next-level device from the physical address routing table stored locally and transmits the data to the next-level device.

Further, after the to-be-connected device 502 connects to the first network through the target mutual assistance device 508, the to-be-connected device 502 may send detection data to the target mutual assistance device 508 once every 1 minute. If the target mutual assistance device 508 does not receive the detection data from the to-be-connected device 502 for 2 minutes, the target mutual assistance device 508 may determine that the to-be-connected device 502 is lost and clear the relevant information of the to-be-connected device 502. If the to-be-connected device 502 does not receive a reply to the detection data from the target mutual assistance device 508, it may indicate that the connection is invalid. It needs to notify all devices under the node to clear the connection relationship and search for the network again. The detection data may include the following fields: protocol version, capability display, frame type, message ID, and CMD.

Further, after the to-be-connected device 502 connects to the first network through the target mutual assistance device 508, it is necessary to detect abnormal connection condition of the to-be-connected device 502 in real time. Specifically, when the connection between the target mutual assistance device 508 and the routing device 504 is disconnected, the routing device 504 shall retain the device information and address resolution protocol of all mutual assistance devices 506 connected to the routing device 504 itself. After the routing device 504 is restarted, there is no need to clear the device information and address resolution protocol of the mutual assistance devices 506 connected to the routing device 504; it only needs to clear the device addresses in the address resolution protocol. Then the routing device 504 may send an instruction to a mutual assistance device 506 connected to it to notify the mutual assistance devices 506 to re-initiate a dynamic host configuration protocol and update the physical address routing table, so that the mutual assistance devices 506 may re-establish a connection with the routing device 504. The instruction sent by the routing device 504 may include the following fields: protocol version, capability display, frame type, message ID, and CMD.

Further, in a case where the target mutual assistance device 508 detects that its connection to the routing device 504 is disconnected, it may send an instruction to the to-be-connected device 502 connected to itself to notify the to-be-connected device 502 to re-initiate the connection. Specifically, the instruction sent by the target mutual assistance device 508 may include the following fields: protocol version, capability display, frame type, message ID, and CMD.

According to the third aspect of the present disclosure, as illustrated in Fig. 3, a network connection apparatus 300 for a to-be-connected device is proposed. The network connection apparatus 300 may include a sending unit 302, a receiving unit 304, a determining unit 306, a searching unit 308, and a first connection unit 310. The sending unit 302 may be configured to send the first connection request for the first network to the routing device. The receiving unit 304 may be configured to receive the first response message matching the first connection request sent by the routing device. The determining unit 306 may be configured to determine connection condition for the first network according to the first response message. The searching unit 308 may be configured to search for one or more mutual assistance devices in a case where the to-be-connected device does not meet the connection condition for the first network. The mutual assistance devices may be connected to the first network through the routing device. The first connection unit 310 may be configured to connect to the first network via the one or more mutual assistance devices.

The network connection apparatus 300 provided by the present disclosure may search for one or more mutual assistance devices connected to the first network in a case where the to-be-connected device does not meet the connection condition for the first network, thereby enabling the to-be-connected device to connect to the mutual assistance device and further to the first network through the mutual assistance device, so that the to-be-connected device may access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhance the user experience of using the to-be-connected device.

Further, the sending unit 302 may be further configured to send the second connection request for the first network to the one or more mutual assistance devices. The receiving unit 304 may be further configured to receive second response messages matching the second connection request sent by the one or more mutual assistance devices. The determining unit 306 may be further configured to determine the target mutual assistance device from the one or more mutual assistance devices according to the one or more second response messages. The first connection unit 310 may be specifically configured to establish a network connection with the target mutual assistance device.

Further, the first connection unit 310 may be specifically configured to perform key negotiation with the target mutual assistance device; and, establish the network connection with the target mutual assistance device according to the key generated by the mutual assistance device.

Further, the first connection unit 310 may be specifically further configured to receive the second ciphertext sent by the mutual assistance device. The second ciphertext may be obtained by the mutual assistance device encrypting the first text and the second text. The first text may be obtained by the mutual assistance device decrypting the first ciphertext. The second text may be the preset text for key negotiation between the mutual assistance device and the to-be-connected device. The first connection unit 310 may be specifically further configured to decrypt the second ciphertext to generate the third text; determine the negotiation result of the key negotiation according to the third text; and, send the negotiation result to the mutual assistance device.

Further, the first connection unit 310 may be specifically further configured to obtain text content of the third text; and, determine that the negotiation result is successful in a case where the text content of the third text includes the first text.

Further, the first connection unit 310 may be specifically further configured to encrypt the negotiation result based on the public key of the to-be-connected device, to generate the third ciphertext; and, send the third ciphertext to the mutual assistance device.

Further, the network parameters may include the signal strength, the network hierarchy level of the mutual assistance device in the first network, and the number of access points of the mutual assistance device. The determining unit 306 may be specifically configured to determine the connection index of each mutual assistance device according to at least any one of the signal strength, the network hierarchy level, and the number of access points; and determine the target mutual assistance device from the plurality of mutual assistance devices according to the connection index.

Further, the determining unit 306 may be specifically further configured to obtain the strength weight for the signal strength and strength scores for different signal strengths; obtain the point weight for the number of access points and point scores for different numbers of access points; obtain a hierarchy level weight for the network hierarchy level and hierarchy level scores for different network hierarchy levels; and, determine the connection index according to the preset formula *P = A* × *a + B* × *b + C* × *c*. P may be the connection index. A may be the strength score. *a* may be the strength weight. B may be the point score. *b* may be the point weight. C may be the hierarchy level score. *c* may be the hierarchy level weight.

Further, the determining unit 306 may be specifically configured to determine the signal strength of the routing device according to the first response message; and, determine the connection condition according to the signal strength.

Further, the determining unit 306 may be specifically further configured to determine that the to-be-connected device does not meet the connection condition in a case where the first response message includes the preset data packet.

Further, the sending unit 302 may be further configured to send the detection signal to the target mutual assistance device according to the pre-set time interval; receive the reply signal sent by the target mutual assistance device. The determining unit 306 may be further configured to detect the connection state between the to-be-connected device and the target mutual assistance device according to the detection signal and the reply signal.

According to a fourth aspect of the present disclosure, as illustrated in Fig. 4, a network connection apparatus 400 for the mutual assistance device may be proposed. The mutual assistance device may be connected to the first network through the routing device. The connection apparatus may include a response unit 402, a negotiation unit 404, and a second connection unit 406. The response unit 402 may be configured to generate and send the response message according to a connection request in a case where the connection request from the to-be-connected device is received. The response message may be configured for the to-be-connected device to determine the mutual assistance device to be connected. The negotiation unit 404 may be configured to perform key negotiation with the to-be-connected device to generate a key in a case where a key negotiation request from the to-be-connected device is received. The second connection unit 406 may be configured to establish the network connection with the to-be-connected device according to the key.

The network connection apparatus 400 provided by the present disclosure may connect the to-be-connected device to the mutual assistance device when the to-be-connected device does not meet the connection condition for the first network, so as to realize the connection of the to-be-connected device to the first network through the mutual assistance device, enabling the to-be-connected device to access the internet via the first network. Therefore, the present disclosure may solve the problem that the to-be-connected device cannot maintain a continuous and stable connection to the first network through the routing device due to the low strength of the network signal received from the routing device. By means of the mutual assistance device, a continuous and stable connection to the first network may be achieved, which may improve the network access experience of the to-be-connected device and further enhance the user experience of using the to-be-connected device.

Further, the negotiation unit 404 may be specifically configured to decrypt the first ciphertext to generate the first text in a case where the first ciphertext sent by the to-be-connected device is received; encrypt the first text and a second text to generate and send the second ciphertext, where the second text is the preset text for key negotiation between the mutual assistance device and the to-be-connected device; receive the key negotiation result sent by the to-be-connected device; and generate the key according to the first text and the second text in a case where the key negotiation result is successful. The key negotiation result may be determined by the to-be-connected device according to the third text obtained by decrypting the second ciphertext.

Further, the network connection apparatus 400 may further include an updating unit. The updating unit may be configured to update the device node link of the devices connected to the first network.

Further, the updating unit may be specifically configured to: obtain the original link of the first network, wherein the original link may be the device node link of the first network before the to-be-connected device is connected to the target mutual assistance device; add the device node of the to-be-connected device to the downstream of the device node of the target mutual assistance device in a case where there is no device node downstream of the device node of the target mutual assistance device in the original link; copy the original link to generate the copied link in a case where there is a device node downstream of the device node of the target mutual assistance device in the original link; and, replace the downstream device node of the target mutual assistance device in the copied link with the device node of the to-be-connected device.

Further, the network connection apparatus 400 may further include an establishing unit. The establishing unit may be configured to establish the device routing table of the first network.

Further, the network connection apparatus 400 may further include a sending unit. The sending unit may be configured to send the target key to all devices connected to the mutual assistance device.

According to a fifth aspect of the present disclosure, an electronic device may be proposed. The electronic device may include a processor and a memory. The memory may store a program or an instruction executable on the processor. The program or the instruction, when executed by the processor, may implement the operations of the network connection method provided in any one of the above-mentioned embodiments.

The electronic device provided by the present disclosure may include a memory and a processor. The electronic device may further include a program or an instruction stored on the memory. When the program or the instruction is executed by the processor, the operations of the network connection method provided in any one of the above-mentioned embodiments may be implemented. Therefore, the electronic device may have all the beneficial effects of the above-mentioned network connection method, which are not repeated here.

According to a sixth aspect of the present disclosure, a computer-readable storage medium is proposed. A program or an instruction may be stored on the computer-readable storage medium. The program or the instruction, when executed by a processor, may implement the operations of the network connection method provided in any one of the above-mentioned embodiments.

The computer-readable storage medium provided by the present disclosure may store a program or an instruction thereon. When the program or the instruction is executed by a processor, the operations of the network connection method provided in any one of the above embodiments may be implemented. Therefore, the computer-readable storage medium may have all the beneficial effects of the above-mentioned network connection method, which are not repeated here.

According to a seventh aspect of the present disclosure, a computer program product may be proposed. The computer program product may include a computer program or an instruction. The computer program or the instruction, when executed by a processor, may implement the operations of the network connection method provided in any one of the above-mentioned embodiments.

The computer program product provided by the present disclosure may include a computer program or an instruction. When the computer program or the instruction is executed by a processor, the operations of the network connection method provided in any one of the above-mentioned embodiments may be implemented. Therefore, the computer program product has all the beneficial effects of the above-mentioned network connection method, which are not repeated here.

In the description of the present disclosure, the term "plurality" may refer to two or more, unless explicitly defined otherwise. Terms such as "upper" and "lower" indicating orientations or positional relationships are based on the orientations or positional relationships illustrated in the drawings, which are only for convenience of describing the present disclosure and simplifying the description, rather than indicating or implying that the referred apparatus or element must have a specific orientation, be constructed and operated in a specific orientation, and thus should not be understood as a limitation to the present disclosure. Terms such as "connected", "installed" and "fixed" should be understood in a broad sense. For example, "connected" may be a fixed connection, a detachable connection, or an integral connection; it may be a direct connection or an indirect connection via an intermediate medium. For those skilled in the art, the specific meanings of the above-mentioned terms in the present disclosure may be understood according to specific situations.

In the description of the present specification, descriptions of the terms "one embodiment", "some embodiments", "specific embodiment" or the like mean that specific features, structures, materials, or characteristics described in connection with the embodiment or example are included in at least one embodiment or example of the present disclosure. In the present specification, schematic representations of the above terms do not necessarily refer to the same embodiment or example. Moreover, the described specific features, structures, materials, or characteristics may be combined in any suitable manner in any one or more embodiments or examples.

The above are only some embodiments of the present disclosure and are not intended to limit the present disclosure. For those skilled in the art, the present disclosure may have various modifications and variations. Any modification, equivalent replacement, improvement, or the like made within the spirit and principle of the present disclosure shall be included in the protection scope of the present disclosure.

## Claims

1. A network connection method, performed by a to-be-connected device, and comprising:
sending a first connection request for a first network to a routing device;
receiving a first response message that is sent by the routing device and corresponds to the first connection request;
determining, according to the first response message, a connection condition of the first network;
searching for at least one mutual assistance device in a case where the to-be-connected device does not meet the connection condition of the first network, wherein the mutual assistance device is connected to the first network through the routing device; and
connecting to the first network through the at least one mutual assistance device.

2. The connection method as claimed in claim 1, wherein the connecting to the first network through the at least one mutual assistance device comprises:
sending a second connection request for the first network to the at least one mutual assistance device;
receiving a second response message that is sent by the at least one mutual assistance device and corresponds to the second connection request;
determining a target mutual assistance device from the at least one mutual assistance device according to the at least one second response message; and
establishing a network connection with the target mutual assistance device.

3. The connection method as claimed in claim 2, wherein the establishing the network connection with the target mutual assistance device comprises:
performing key negotiation with the target mutual assistance device; and
establishing the network connection with the target mutual assistance device according to a key generated by the mutual assistance device.

4. The connection method as claimed in claim 3, wherein:
the first connection request comprises a first ciphertext, wherein the first ciphertext is obtained by encrypting a first text based on a public key of the mutual assistance device; and
the performing key negotiation with the target mutual assistance device comprises:
receiving a second ciphertext sent by the mutual assistance device, wherein the second ciphertext is obtained by the mutual assistance device encrypting the first text and a second text, wherein the first text is obtained by the mutual assistance device decrypting the first ciphertext, and the second text is a preset text for key negotiation between the mutual assistance device and the to-be-connected device;
decrypting the second ciphertext to generate a third text;
determining a negotiation result of the key negotiation according to the third text; and
sending the negotiation result to the mutual assistance device, wherein the negotiation result is configured to be received by the mutual assistance device and instruct the mutual assistance device to generate the key.

5. The connection method as claimed in claim 4, wherein the determining the negotiation result of the key negotiation according to the third text comprises:
acquiring text content of the third text; and
determining that the negotiation result is successful in a case where the text content of the third text comprises the first text.

6. The connection method as claimed in claim 4, wherein the sending the negotiation result to the mutual assistance device comprises:
encrypting the negotiation result based on a public key of the to-be-connected device to generate the third ciphertext; and
sending the third ciphertext to the mutual assistance device.

7. The connection method as claimed in claim 2, wherein the determining the target mutual assistance device from the at least one mutual assistance device according to the at least one second response message comprises:
determining network parameters of a plurality of mutual assistance devices according to a plurality of second response messages; and
determining the target mutual assistance device from the plurality of mutual assistance devices according to the network parameters.

8. The connection method as claimed in claim 7, wherein:
the network parameters comprise signal strength, a network hierarchy level of the mutual assistance device in the first network, and the number of access points of the mutual assistance device; and
the determining the target mutual assistance device from the plurality of mutual assistance devices according to the network parameters comprises:
determining a connection index of the mutual assistance device according to at least one of the signal strength, the network hierarchy level, and the number of access points; and
determining the target mutual assistance device from the plurality of mutual assistance devices according to the connection index.

9. The connection method as claimed in claim 8, wherein the determining the connection index of the mutual assistance device according to at least one of the signal strength, the network hierarchy level, and the number of access points comprises:
acquiring an intensity weight for the signal strength and intensity scores for different signal strengths;
acquiring a point weight for the number of access points and point scores for different numbers of access points; and
acquiring a hierarchy level weight for the network hierarchy level and level scores for different network hierarchy levels;
determining the connection index according to a preset formula P=A×a+B×b+C×c, wherein P is the connection index, A is the intensity score, a is the intensity weight, B is the point score, b is the point weight, C is the hierarchy level score, and c is the hierarchy level weight.

10. The connection method as claimed in any one of claims 1 to 9, wherein the determining, according to the first response message, the connection condition of the first network comprises:
determining the signal strength of the routing device according to the first response message; and
determining the connection condition according to the signal strength.

11. The connection method as claimed in any one of claims 1 to 9, wherein the determining, according to the first response message, the connection condition of the first network comprises:
determining that the to-be-connected device does not meet the connection condition in a case where the first response message comprises a preset data packet.

12. The connection method as claimed in claim 7, wherein after the connecting to the first network through the at least one mutual assistance device, the connection method further comprises:
sending a detection signal to the target mutual assistance device according to a preset time interval;
receiving a reply signal sent by the target mutual assistance device; and
detecting a connection state between the to-be-connected device and the target mutual assistance device according to the detection signal and the reply signal.

13. A network connection method, performed by a mutual assistance device, the mutual assistance device being connected to a first network through a routing device, and the connection method comprising:
in a case where a connection request from a to-be-connected device is received, generating and sending a response message according to the connection request, wherein the response message is configured to enable the to-be-connected device to determine the mutual assistance device it needs to connect to;
performing key negotiation with the to-be-connected device to generate a key in a case where a key negotiation request is received from the to-be-connected device; and
establishing a network connection with the to-be-connected device according to the key.

14. The connection method as claimed in claim 13, wherein the performing the key negotiation with the to-be-connected device to generate the key in a case where the key negotiation request from the to-be-connected device is received comprises:
in a case where a first ciphertext is received from the to-be-connected device, decrypting the first ciphertext to generate a first text;
encrypting the first text and a second text to generate and send a second ciphertext, wherein the second text is a preset text for key negotiation between the mutual assistance device and the to-be-connected device; and
receiving a key negotiation result sent by the to-be-connected device, and generating the key according to the first text and the second text in a case where the key negotiation result is successful,
wherein the key negotiation result is determined by the to-be-connected device according to a third text obtained by decrypting the second ciphertext.

15. The connection method as claimed in claim 13 or 14, wherein after the establishing the network connection with the to-be-connected device according to the key, the connection method further comprises:
updating a device node link connected to the first network.

16. The connection method as claimed in claim 15, wherein the updating the device node link connected to the first network comprises:
acquiring an original link of the first network, wherein the original link is a device node link of the first network before the to-be-connected device is connected;
adding a device node of the to-be-connected device to a downstream of a device node of the mutual assistance device in a case where there is no device node downstream of the device node of the mutual assistance device in the original link;
copying the original link to generate a copied link in a case where there is a device node downstream of the device node of the mutual assistance device in the original link; and
replacing a downstream device node of the mutual assistance device in the copied link with the device node of the to-be-connected device.

17. The connection method as claimed in claim 15, wherein after the updating the device node link connected to the first network, the connection method further comprises:
establishing a device routing table of the first network.

18. The connection method as claimed in claim 13 or 14, further comprising:
sending the key to all devices connected to the mutual assistance device.

19. A network connection apparatus used for a to-be-connected device, comprising:
a sending unit, configured to send a first connection request for a first network to a routing device;
a receiving unit, configured to receive a first response message that is sent by the routing device and corresponds to the first connection request;
a determining unit, configured to determine, according to the first response message, a connection condition of the first network;
a searching unit, configured to search for at least one mutual assistance device in a case where the to-be-connected device does not meet the connection condition of the first network, wherein the mutual assistance device is connected to the first network through the routing device; and
a first connection unit, configured to connect to the first network through the at least one mutual assistance device.

20. A network connection apparatus used for a mutual assistance device, the mutual assistance device being connected to a first network through a routing device, and the connection apparatus comprising:
a response unit, configured to, in a case where a connection request is received from a to-be-connected device, generate and send a response message according to the connection request, wherein the response message is configured to enable the to-be-connected device to determine the mutual assistance device it needs to connect to;
a negotiation unit, configured to perform key negotiation with the to-be-connected device to generate a key in a case where a key negotiation request is received from the to-be-connected device; and
a second connection unit, configured to establish a network connection with the to-be-connected device according to the key.

21. An electronic device, comprising a processor and a memory, wherein the memory stores a program or an instruction executable on the processor, and the program or the instruction is configured to implement steps of the method as claimed in any one of claims 1 to 12 and/or steps of the method as claimed in any one of claims 13 to 18 while being executed by the processor.

22. A computer-readable storage medium, storing a program or an instruction, wherein the program or the instruction is configured to implement steps of the method as claimed in any one of claims 1 to 12 and/or steps of the method as claimed in any one of claims 13 to 18 while being executed by the processor.

23. A computer program product, comprising a computer program or an instruction, wherein the program or the instruction is configured to implement steps of the method as claimed in any one of claims 1 to 12 and/or steps of the method as claimed in any one of claims 13 to 18 while being executed by the processor.
